# EUROPEAN PATENT SPECIFICATION

(11) **EP 3 626 533 B1**
(45) Date of publication and mention of the grant of the patent: **28.06.2023**
(21) Application number: 18382681.7
(22) Date of filing: 24.09.2018
(51) Int. Cl.: B60Q 1/068, F21S 41/39, F21V 15/04, F21S 45/10

(54) **LIGHTING DEVICE FOR VEHICLE WITH VIBRATION ABSORBER**
BELEUCHTUNGSVORRICHTUNG FÜR EIN FAHRZEUG MIT SCHWINGUNGSDÄMPFER
DISPOSITIF D'ÉCLAIRAGE POUR VÉHICULE AVEC ABSORBEUR DE VIBRATIONS

(43) Date of publication of application: 25.03.2020
(73) Proprietor: Valeo Iluminacion, 23600 Martos (ES)
(72) Inventor: MORENO, Carlos, 23600 MARTOS (ES); COLMENERO, Pedro, 23600 MARTOS (ES); TORRES, Tomas, 23600 MARTOS (ES); TEBA, Daniel, 23600 MARTOS (ES); MONTES MARTINEZ, Luis, 23600 MARTOS (ES)
(74) Representative: Valeo Visibility

(56) References cited:
- EP-A1- 2 865 567
- EP-A2- 0 605 172
- DE-A1-102012 100 459
- JP-A- H0 465 004
- JP-A- 2001 351 407
- JP-A- 2010 202 077
- JP-A- 2010 257 620

## Description

### TECHNICAL FIELD

The present invention relates to a lighting device for a vehicle, and more particularly, to a lighting device for a vehicle with a vibration absorber.

### STATE OF THE ART

Lighting devices are known which comprise an optical module (a set of parts formed by several optical function parts and other connecting elements there between). The optical module is assembled to a housing of a lighting device by means of connection points, and the optical module is movable relative to the housing to correct the orientation of the illuminated beam, in particular in azimuth or horizontally as well as vertically.

The lighting device has to meet vibration and resonance requirements. The lighting device may be subjected to vibrations due to the heavy weight of the optical module. Under these vibration conditions, the optical module is subjected to that vibration which can cause a light beam to oscillate both in normal cruise operation and when idling. This effect may not meet customer requirements and be annoying for the end user of a vehicle.

The vibrations that are generated may transmit from one component to another due to the mechanical links or connections that allow their regulation. These connections do not dampen the vibrations but transfer them to the rear components, which affects the structural integrity of the lighting device. Therefore, such vibrations can result in the generation of a flashing light beam, which is undesirable and even lead to visible defects or breaks within the lighting device. The vibration phenomena cause not only flickering problems but also cause possible resonance problems that can cause damage to the connection points to fix the optical module and other components of the lighting device. In addition, due to vibrations, there is the possibility of deviating from the regulations established for different lighting functions.

The design of the optical module can be changed to stop the occurrence of the vibrations. However, changing the design of the optical module can have a potential impact on the different functions of the lighting device and also on the stability of the light beam.

A lighting device for an automotive vehicle with a vibration absorber for an optical module is known from JP 2010 202077 A.

### SUMMARY OF THE INVENTION

An object of the present invention is to solve the disadvantages described above of known lighting devices. In particular, it is the object of the present invention is to provide a lighting device that solves the problem of light beam flickering by attenuating the vibrations caused by an optical module of the lighting device.

Another object of the present invention is to provide a shock absorber or a vibration absorber or a vibration damper or a spring having a specific design for absorbing the vibrations produced in lighting devices of different configurations. Yet another object of the present invention is to provide a vibration absorber that can be easily accommodated between the optical module and an interior element of the lighting device, for example, the interior element is a bracket disposed inside a housing of the lighting device.

According to an embodiment of the present invention, there is provided a lighting device for an automotive vehicle, comprising: an optical module assembled inside the lighting device; a bracket for supporting the optical module, the optical module being connected to the bracket by at least one connection point of the optical module; and wherein the at least one connection point is provided with a damper. The damper comprises at least two flexible portions extending from either side of the connection point and each relying on a wall of the bracket. The damper has a mounting portion for mounting the damper at the connection point, and the at least two flexible portions of the damper extend from either side of the mounting portion. The at least two flexible portions are more flexible than the mounting portion. The connection point comprises a pin inserted into the bracket and a mounting leg disposed next to the pin on which the damper is mounted. The mounting leg has a T-shape retaining the damper. In an aspect, the optical module comprises at least two reflectors.

In an embodiment, the damper is placed between the optical module and the bracket of the lighting device such that the occurrence of the resonance and the vibrations can be avoided.

In an embodiment, the bracket comprises an opening provided with a top inner wall and a bottom inner wall, and the bracket is disposed inside a housing of the lighting device.

In an embodiment, the bracket has a geometry adapted to the design of the damper to absorb the vibrations caused by the optical module.

In an embodiment, the flexible portions extend perpendicularly to the connection point, and the flexible portions extend from the mounting portion of the damper in a curved manner towards the wall of the bracket.

The connection point belongs to a mounting part of the optical module to support the optical components of the optical module. The connection point comprises the pin inserted into the bracket and the mounting leg disposed next to the pin on which the damper is mounted. In particular, the pin being inserted in the opening provided with the top inner wall of the bracket, and each of the flexible portions of the damper rests on the top or the bottom inner wall of the bracket.

Further, the at least one connection point of the lighting device comprises: a fixed connection point around which the optical module can be rotated; a first connection point by means of which the optical module can move vertically with respect to the bracket; and a second connection point by which the optical module can be moved horizontally relative to the bracket.

In an embodiment, the first connection point is provided with the damper. In another embodiment, the second connection point is provided with the damper.

Yet, in another embodiment, the first connection point and the second connection point are provided with a damper.

The damper is designed in such a way that the flexible portions of the damper are more flexible than the mounting portion of the damper and may be more flexible than at least one connection point for absorbing vertical vibrations in both directions (up and down), and therefore, the flicker of the light beam can be attenuated.

### BRIEF DESCRIPTION OF THE INVENTION

To complete the description and to provide a better understanding of the invention, a set of drawings is provided. Said drawings form an integral part of the description and illustrate an embodiment of the invention, which should not be construed as restricting the scope of the invention, but only as an example of how the invention can be carried out. The scope of invention is only limited by the appended claims.
Figure 1 shows a perspective view of an optical module of a lighting device attached with a damper, according to an embodiment of the present invention.
Figure 2 shows an enlarged view of a part of the optical module attached with the damper shown in Figure 1, according to an embodiment of the present invention.
Figure 3 shows the optical module of Figure 1 connected to a bracket of the lighting device, according to an embodiment of the present invention.
Figure 4 shows a part of the lighting device in which the damper is mounted with the optical module and the bracket of the housing, according to an embodiment of the present invention.

### DETAILED DESCRIPTION OF THE INVENTION

Hereinafter, embodiments of the present invention will be described with reference to the accompanying drawings.

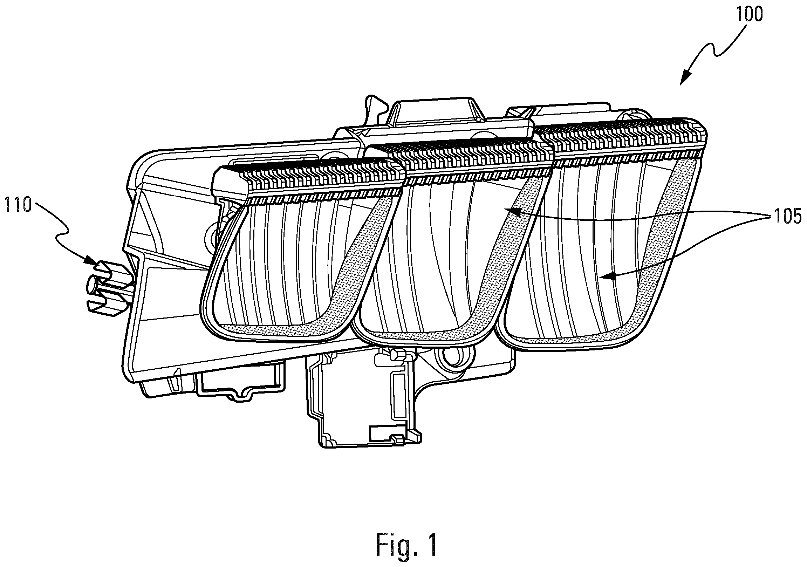

Figure 1 shows a perspective view of an optical module of a lighting device attached to a damper, according to an embodiment of the present invention.

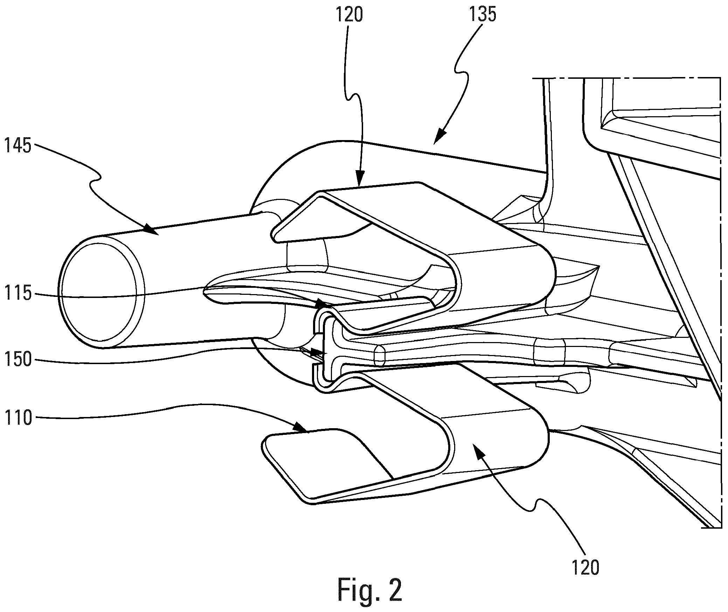

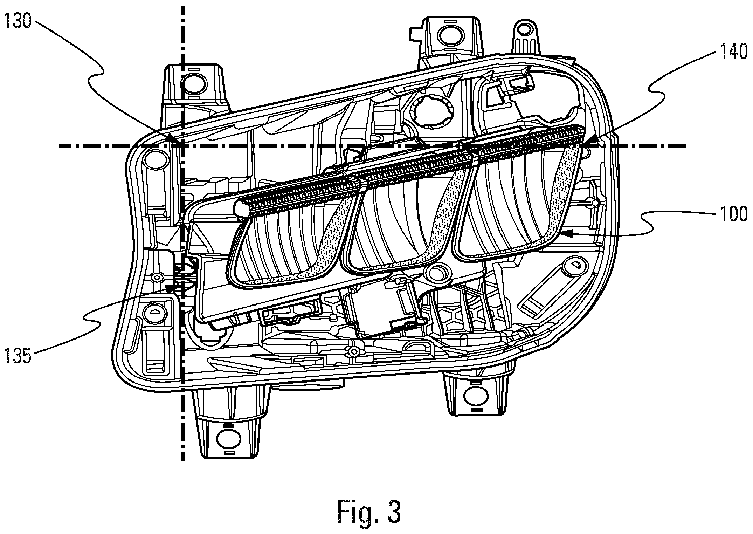

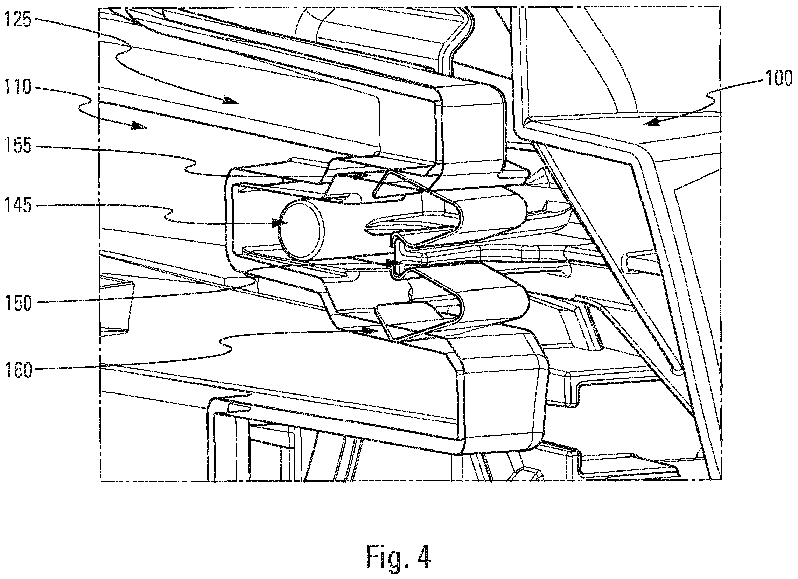

Figure 2 shows an enlarged view of a part of the optical module attached with the damper shown in Figure 1, according to an embodiment of the present invention. Figure 3 shows the optical module of Figure 1 connected to a bracket of the lighting device, according to an embodiment of the present invention. Figure 4 shows a part of the lighting device in which the damper 110 is mounted with the optical module 100 and the bracket 125 of the housing of the lighting device, according to an embodiment of the present invention.

According to an embodiment of the present invention, the optical module 100 shown in Figure 1 comprises at least two reflectors 105 and other components such as monochip or multichip (not shown in Figure 1) to provide different illumination and / or signaling functions in an automotive vehicle. Lighting devices having such optical modules 100 may be heavier and, therefore, may have problems in vibration and resonance situations. Such vibrations can result in a flicker of the light beam. To dampen such vibrations, the lighting device of the present invention is provided with a damper 110 having a specific design such that the damper 110 can absorb the vibrations to which the lighting device is subjected. As can be seen in Figure 2, the damper 110 includes a mounting portion 115 and at least a flexible portion 120. For the purpose of the explanation, hereinafter, the terms 'damper', 'shock absorber', 'spring' and 'vibration absorber' can be used interchangeably

The lighting device for the automotive vehicle comprises: the optical module 100 shown in Figure 1; and a bracket 125 (shown in Figure 4) for supporting the optical module 100. The optical module 100 is connected to the bracket 125 by at least one connection point 130, 135, 140 of the optical module 100, as shown in Figure 3. The connection points 130, 135, 140 belong to a mounting part of the optical module 100 for supporting optical components of the optical module 100.

As can be seen from Figure 3, the optical module 100 is assembled to the bracket 125 of the lighting device by means of the connection points 130, 135, 140. The optical module 100 is movable relative to the housing of the lighting device to correct an orientation of the illuminated beam, in particular in azimuth or horizontally as well as vertically.

As can be seen in Figure 3, the optical module 100 is fixed to the bracket 125 by three connection points 130, 135, 140, namely a fixed connection point 130 around which the optical module 100 can be rotated; a first connection point 135 by which the optical module 100 can move vertically with respect to the bracket 125; and a second connection point 140 by which the optical module 100 can be moved horizontally relative to the bracket 125. These three connection points 130, 135, 140 form a triangle; two vertices are movable in translation approximately one perpendicular to a plane formed by the triangle to adjust the illuminated beam horizontally and vertically.

The at least one connection point 130, 135, 140 is provided with the damper 110, and the two flexible portions 120 of the damper 110 extend from either side of the connection point 135 and each flexible portion 120 depends on a wall of the bracket 125. For the purpose of explanation, the damper 110 shown in the Figures is positioned at the first connection point 135. It is understood that the damper 110 can also be provided at the second connection point 140.

As shown in Figure 2, the connection point 135 comprises a pin 145 and a mounting leg 150 disposed adjacent to the pin 145 on which the damper 110 is mounted. In particular, the mounting portion 115 of the damper 110 is mounted on the mounting leg 150. The mounting leg 150 is T-shaped, which facilitates mounting the damper 110.

In one embodiment, the bracket 125 is disposed within a housing of the lighting device. As can be seen in Figure 4, the bracket 125 is provided with an opening at a top inner wall 155 and a bottom inner wall 160 of the bracket 125.

As can be seen in Figure 2 and Figure 4, in one embodiment, the at least two flexible portions 120 of the damper 110 extend from the mounting portion 115 in a curved manner toward the wall of the bracket 125, and the flexible portions 120 of the damper 110 extends perpendicularly from the connection point 135. It should be noted that the flexible portions 120 of the damper 110 can take various forms. In fact, their ends can have different shapes so that the ends can be received in the opening provided at the top inner wall 155 and the bottom inner wall 160 of the bracket 125. The ends of the flexible portions 120 are adapted to engage with the top inner wall 155 and the bottom inner wall 160 of the bracket 125. For example, the ends of flexible portions 120 are bent towards mounting portion 115 of damper 110, as can be seen from Figure 2 and Figure 4.

The flexible portions 120 of the damper 110 can absorb the vibrations that can occur when the vehicle is traveling on roads in bad condition.

The at least two flexible portions 120 of the damper 110 are more flexible than the mounting portion 115 and may be more flexible than the connection point 135 to absorb vertical vibrations in both directions (upper and lower), and therefore the flicker of the beam of light can be attenuated.

As mentioned above, according to one embodiment of the present subject matter, the damper 110 may be provided at the first connection point 135. According to another embodiment of the present subject matter, the damper 110 may be provided at the second connection point 140.

Yet, in another embodiment, the first connection point 135 and the second connection point 140 are both provided with a damper 110. The damper 110 is designed in such a way that the damper 110 can absorb the vibrations to which the lighting device is subjected.

Further, in an embodiment, the first connection point 135 may be provided with more than one damper 110. In another embodiment, the second connection point 140 may be provided with more than one damper 110. However, in another embodiment, the first connection point 135 and second connection point 140 are both provided with more than one damper 110.

Furthermore, in an embodiment, the design and dimensions of the damper 110 depend on a weight ratio between the optical module 100 and the complete lighting device and the relative position of the optical module 100 within the lighting device.

Further, the damper 110 of the present invention can be adapted to lighting devices having different configurations. Therefore, the present invention is not limited to a particular type of a lighting device.

Thus, according to the present invention, the damper 110 arranged to the optical module 100 and the bracket 125 is configured to dampen at least a majority of vertical vibrations, i.e., vibrations oriented along the plane perpendicular to the three connection points.

The lighting device of the present invention, therefore, reduces or eliminates the problems of flickering of the light beam when the vehicle travelling on roads in bad condition, without having to change the design of the optical module and its support means. As a result, driving comfort increases since the shaking of the light distribution is practically no longer present.

## Claims

1. A lighting device for an automotive vehicle, comprising:
an optical module (100);
a bracket (125) for supporting the optical module (100), the optical module (100) being connected to the bracket (125) by at least one connection point (130, 135, 140) of the optical module (100);
wherein the at least one connection point (130, 135, 140) is provided with a damper (110), and the damper (110) comprises at least two flexible portions (120) extending from either side of the connection point (135, 140) and each relying on a wall of the bracket (125);
wherein the damper (110) has a mounting portion (115) for mounting the damper (110) at the connection point (135, 140), and the at least two flexible portions (120) of the damper (110) extend from either side of the mounting portion (115), and wherein the at least two flexible portions (120) are more flexible than the mounting portion (115); and
**characterized in that**
the connection point (135, 140) comprises a pin (145) inserted into the bracket (125) and a mounting leg (150) disposed next to the pin (145) on which the damper (110) is mounted, wherein the mounting leg (150) has a T-shape retaining the damper (110).

2. The lighting device according to claim 1, wherein the connection point (135, 140) belongs to a mounting part of the optical module (100) to support optical components of the optical module (100).

3. The lighting device according to claim 2, wherein the optical components comprise at least two reflectors (105).

4. The lighting device according to claims 1 to 3, wherein the at least two flexible portions (120) extend from the mounting portion (115) in a curved manner towards the wall of the bracket (125).

5. The lighting device according to claims 1 to 3, wherein the at least one connection point (130, 135, 140) comprises:
a fixed connection point (130) around which the optical module (100) can be rotated;
a first connection point (135) by means of which the optical module (100) can be moved vertically relative to the bracket (125); and
a second connection point (140) by means of which the optical module (100) can be moved horizontally relative to the bracket (125).

6. The lighting device according to claim 5, wherein the first connection point (135) is provided with the damper (110).

7. The lighting device according to claim 5, wherein the second connection point (140) is provided with the damper (110).

8. The lighting device according to claim 5, wherein the first connection point (135) and the second connection point (140) are both provided with a damper (110).

9. The lighting device according to claims 1 to 8, wherein the bracket (125) is disposed within a housing of a lighting device.

## Patentansprüche

1. Beleuchtungsvorrichtung für ein Kraftfahrzeug, umfassend:
ein optisches Modul (100);
eine Halterung (125) zum Tragen des optischen Moduls (100), wobei das optische Modul (100) mit der Halterung (125) durch mindestens einen Verbindungspunkt (130, 135, 140) des optischen Moduls (100) verbunden ist;
wobei der mindestens eine Verbindungspunkt (130, 135, 140) mit einem Dämpfer (110) versehen ist und der Dämpfer (110) mindestens zwei flexible Abschnitte (120) umfasst, die sich von jeder Seite des Verbindungspunkts (135, 140) erstrecken und sich jeweils auf eine Wand der Halterung (125) stützen;
wobei der Dämpfer (110) einen Montageabschnitt (115) zum Montieren des Dämpfers (110) an dem Verbindungspunkt (135, 140) umfasst und sich die mindestens zwei flexiblen Abschnitte (120) des Dämpfers (110) von jeder Seite des Montageabschnitts (115) erstrecken, und wobei
die mindestens zwei flexiblen Abschnitte (120) flexibler als der Montageabschnitt (115) sind; und
**dadurch gekennzeichnet, dass**
der Verbindungspunkt (135, 140) einen Stift (145), der in die Halterung (125) eingesetzt ist, und einen neben dem Stift (145) angeordneten Montageschenkel (150) umfasst, auf dem der Dämpfer (110) montiert ist, wobei der Montageschenkel (150) eine den Dämpfer (110) haltende T-Form aufweist.

2. Beleuchtungsvorrichtung nach Anspruch 1, wobei der Verbindungspunkt (135, 140) zu einem Montageteil des optischen Moduls (100) zum Tragen optischer Komponenten des optischen Moduls (100) gehört.

3. Beleuchtungsvorrichtung nach Anspruch 2, wobei die optischen Komponenten mindestens zwei Reflektoren (105) umfassen.

4. Beleuchtungsvorrichtung nach den Ansprüchen 1 bis 3, wobei sich die mindestens zwei flexiblen Abschnitte (120) von dem Montageabschnitt (115) in gekrümmter Weise hin zur Wand der Halterung (125) erstrecken.

5. Beleuchtungsvorrichtung nach den Ansprüchen 1 bis 3, wobei der mindestens eine Verbindungspunkt (130, 135, 140) umfasst:
einen feststehenden Verbindungspunkt (130), um den das optische Modul (100) gedreht werden kann;
einen ersten Verbindungspunkt (135), mittels dessen das optische Modul (100) relativ zur Halterung (125) vertikal bewegt werden kann; und
einen zweiten Verbindungspunkt (140), mittels dessen das optische Modul (100) relativ zur Halterung (125) horizontal bewegt werden kann.

6. Beleuchtungsvorrichtung nach Anspruch 5, wobei der erste Verbindungspunkt (135) mit dem Dämpfer (110) versehen ist.

7. Beleuchtungsvorrichtung nach Anspruch 5, wobei der zweite Verbindungspunkt (140) mit dem Dämpfer (110) versehen ist.

8. Beleuchtungsvorrichtung nach Anspruch 5, wobei der erste Verbindungspunkt (135) und der zweite Verbindungspunkt (140) beide mit einem Dämpfer (110) versehen sind.

9. Beleuchtungsvorrichtung nach den Ansprüchen 1 bis 8, wobei die Halterung (125) in einem Gehäuse einer Beleuchtungsvorrichtung angeordnet ist.

## Revendications

1. Dispositif d'éclairage pour véhicule automobile, comprenant :
un module optique (100) ;
un support (125) pour soutenir le module optique (100), le module optique (100) étant relié au support (125) par au moins un point de liaison (130, 135, 140) du module optique (100) ;
l'au moins un point de liaison (130, 135, 140) étant pourvu d'un amortisseur (110), et l'amortisseur (110) comprenant au moins deux parties flexibles (120) s'étendant de chaque côté du point de liaison (135, 140) et chacune s'appuyant sur une paroi du support (125) ;
l'amortisseur (110) ayant une partie de montage (115) pour monter l'amortisseur (110) au niveau du point de liaison (135, 140), et les au moins deux parties flexibles (120) de l'amortisseur (110) s'étendant de chaque côté de la partie de montage (115), et les au moins deux parties flexibles (120) étant plus flexibles que la partie de montage (115) ; et
**caractérisé en ce que** le point de liaison (135, 140) comprend une broche (145) insérée dans le support (125) et une jambe de montage (150) disposée à côté de la broche (145) sur laquelle l'amortisseur (110) est monté, la jambe de montage (150) ayant une forme de T retenant l'amortisseur (110).

2. Dispositif d'éclairage selon la revendication 1, le point de liaison (135, 140) appartenant à une partie de montage du module optique (100) pour supporter les composants optiques du module optique (100).

3. Dispositif d'éclairage selon la revendication 2, les composants optiques comprenant au moins deux réflecteurs (105) .

4. Dispositif d'éclairage selon les revendications 1 à 3, les au moins deux parties flexibles (120) s'étendant de la partie de montage (115) de manière incurvée vers la paroi du support (125).

5. Dispositif d'éclairage selon les revendications 1 à 3, l'au moins un point de liaison (130, 135, 140) comprenant :
un point de liaison fixe (130) autour duquel le module optique (100) peut être tourné ;
un premier point de liaison (135) au moyen duquel le module optique (100) peut être déplacé verticalement par rapport au support (125) ; et
un second point de liaison (140) au moyen duquel le module optique (100) peut être déplacé horizontalement par rapport au support (125).

6. Dispositif d'éclairage selon la revendication 5, le premier point de liaison (135) étant pourvu de l'amortisseur (110).

7. Dispositif d'éclairage selon la revendication 5, le second point de liaison (140) étant pourvu de l'amortisseur (110).

8. Dispositif d'éclairage selon la revendication 5, le premier point de liaison (135) et le second point de liaison (140) étant tous deux pourvus d'un amortisseur (110) .

9. Dispositif d'éclairage selon les revendications 1 à 8, le support (125) étant disposé à l'intérieur d'un boîtier d'un dispositif d'éclairage.
